# EUROPEAN PATENT APPLICATION

(11) **EP 4 546 137 A1**
(43) Date of publication of application: **30.04.2025**
(21) Application number: 24208181.8
(22) Date of filing: 22.10.2024
(51) Int. Cl.: G06F 9/50, G06N 20/00

(54) **SYSTEMS AND METHODS FOR OPTIMIZING CLOUD ARCHITECTURES USING ARTIFICIAL INTELLIGENCE MODELS**

(30) Priority: 26.10.2023 US 202318494833
(71) Applicant: Capital One Services, LLC, McLean, Virginia 22102 (US)
(72) Inventor: HASSAN, Mohammad, McLean, 22102 (US); BARNES, Catherine, McLean, 22102 (US); NOWAK, Matthew Louis, McLean, 22102 (US)
(74) Representative: Boult Wade Tennant LLP

(57) **Abstract**

Systems and methods are described herein for optimizing cloud architectures using artificial intelligence models trained on standardized cloud architecture patterns corresponding to specific requirements. For example, the system may receive a first cloud architecture processing requirement. The system may receive a first set of available cloud resources. The system may generate a first feature input based on the first cloud architecture processing requirement and the first set of available cloud resources. The system may input the first feature input into a first artificial intelligence model to generate a first output. The system may determine, based on the first output, a first cloud architecture pattern for the first set of available cloud resources.

## Description

### BACKGROUND

In recent years, the use of artificial intelligence, including, but not limited to, machine learning, deep learning, etc. (referred to collectively herein as artificial intelligence models, machine learning models, or simply models), has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring its high quality can be complex and time-consuming. Data that is obtained may need to be categorized and labeled accurately, which can be a difficult and time-consuming task that may need to be performed manually. Second, despite the mainstream popularity of artificial intelligence, specialized knowledge may be required to design, program, and integrate artificial intelligence-based solutions, which can limit the amount of people and resources available to create practical implementations of artificial intelligence. Finally, results based on artificial intelligence can be difficult to review as the process by which the results are generated may be unknown or obscured. This obscurity can create hurdles for identifying errors in the results as well as improving the models providing the results. These technical problems may present an inherent challenge with attempting to use an artificial intelligence-based solution in optimizing cloud architectures.

### SUMMARY

Systems and methods are described herein for novel uses and/or improvements to artificial intelligence applications. As one example, systems and methods are described herein for an artificial intelligence-based solution for optimizing cloud architectures.

However, an artificial intelligence-based solution for optimizing cloud architectures faces numerous technical challenges. First, cloud architectures can be highly complex, involving numerous components and services such as virtual machines (VMs), storage, networking, load balancers, databases, and more. Optimizing such architectures requires understanding the intricate relationships and dependencies between these components, which can be difficult to capture accurately. Accordingly, the systems and methods generate a cloud architecture pattern (e.g., a list of used and unused cloud resources and their interconnectivity).

Second, cloud providers often offer a wide range of services and configurations, each with its own set of options and parameters. This lack of standardization makes it challenging to develop artificial intelligence models that can effectively optimize across multiple cloud platforms and configurations. Accordingly, when generating the cloud architecture pattern, the systems and methods may generate a standardized taxonomy of the used and unused cloud resources and their interconnectivity.

Third, cloud environments are dynamic, with workloads and resource demands changing over time. Artificial intelligence models need to continuously adapt and learn from these changes to provide effective optimization. Nonetheless, real-time monitoring and analysis of cloud infrastructure can be computationally intensive and require constant updates to the artificial intelligence models. Accordingly, when generating the standardized cloud architecture pattern, the systems and methods may generate the standardized cloud architecture pattern at a frequency based on characteristics (e.g., a number of resources in the cloud architecture, the processing power of the cloud architecture, the reliability of the cloud architecture, etc.).

Fourth, artificial intelligence models rely on large amounts of data to learn and make accurate predictions. In the case of optimizing cloud architectures, obtaining relevant and high-quality data can be challenging. Access to real-time, fine-grained data about resource utilization, performance metrics, and user behavior is crucial for effective optimization. Accordingly, when generating the standardized cloud architecture pattern, the systems and methods may first validate any incoming usage data for the used and unused cloud resources and their interconnectivity.

Fifth, optimizing a cloud architecture often involves making trade-offs based on various constraints, such as cost, performance, security, and/or compliance. Incorporating these constraints into an artificial intelligence model and finding the right balance can be complex, as the optimal solution may vary depending on the specific requirements and priorities of the organization. Accordingly, the systems and methods may generate a feature input for an artificial intelligence model that is trained on validated usage data for standardized cloud architecture patterns, in which the feature input comprises specific requirements and priorities. Moreover, the trained artificial intelligence model may be trained specifically on standardized cloud architecture patterns that provide the specific cloud architecture processing requirements and priorities and/or a threshold result for the specific cloud architecture processing requirements and priorities.

In some aspects, systems and methods are described herein for optimizing cloud architectures using artificial intelligence models trained on a standardized cloud architecture pattern corresponding to specific requirements. For example, the system may receive a first cloud architecture processing requirement. The system may receive a first set of available cloud resources. The system may generate a first feature input based on the first cloud architecture processing requirement and the first set of available cloud resources. The system may input the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements. The system may determine, based on the first output, a first cloud architecture pattern for the first set of available cloud resources.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram of used and unused cloud resources and their interconnectivity, in accordance with one or more embodiments.
FIG. 2 shows an illustrative diagram for adjusting cloud architecture patterns, in accordance with one or more embodiments.
FIG. 3 shows illustrative components for a system used to train artificial intelligence models on a standardized cloud architecture pattern corresponding to specific requirements, in accordance with one or more embodiments.
FIG. 4 shows a flowchart of the steps involved in optimizing cloud architectures using artificial intelligence models, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

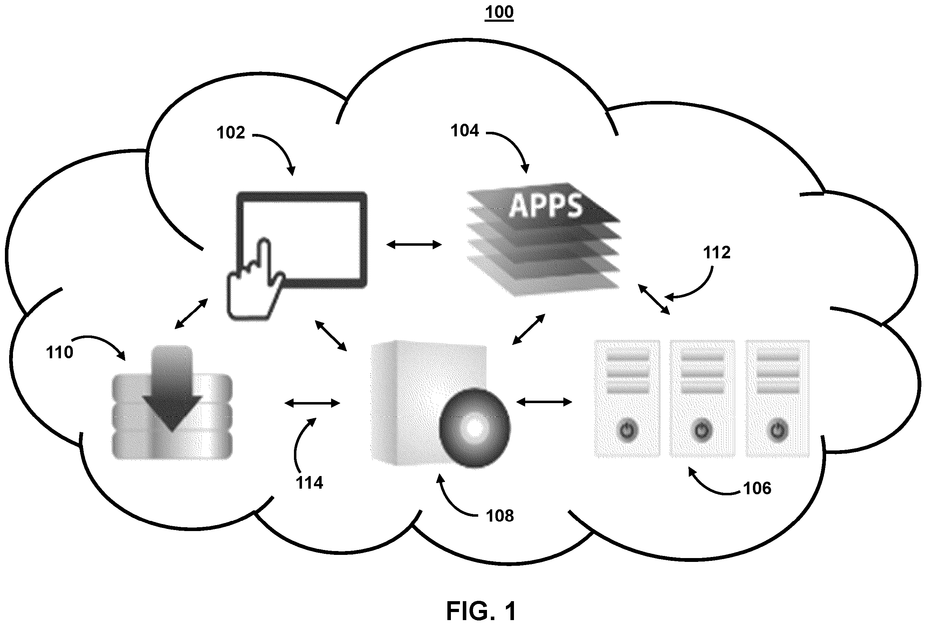

FIG. 1 shows an illustrative diagram of used and unused cloud resources and their interconnectivity, in accordance with one or more embodiments. For example, FIG. 1 shows cloud resources 100, which may comprise a cloud architecture.

Cloud resources 100 include virtual user interface 102. In some embodiments, virtual user interface 102 may comprise a virtual desktop and/or other user interface. As referred to herein, a "user interface" may comprise a human-computer interaction and communication in a device, and may include display screens, keyboards, a mouse, and the appearance of a desktop. For example, a user interface may comprise a way a user interacts with an application or a website.

As referred to herein, "content" should be understood to mean an electronically consumable user asset, such as Internet content (e.g., streaming content, downloadable content, webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user-generated content may include content created and/or consumed by a user. For example, user-generated content may include content created by another but consumed and/or published by the user.

Cloud resources 100 may also include applications 104. Cloud applications, also known as cloud-based applications or software as a service (SaaS), are applications that are hosted and delivered over the Internet from cloud computing infrastructure. These applications leverage the scalability, flexibility, and accessibility of cloud computing to provide various services to users. These applications enable teams to work together in real time, access files from any device, and enhance productivity. These applications may also provide features for lead tracking, contact management, sales forecasting, and customer support. These applications may help organizations streamline processes related to finance, inventory, human resources, supply chain, and other aspects of their operations. These applications provide intuitive interfaces, hosting services, and a range of features for website building, content publishing, and site customization. These applications may facilitate virtual meetings, webinars, screen sharing, and instant messaging, enabling remote collaboration and communication. These applications may provide insights and reporting capabilities to support data-driven decision-making.

Cloud resources 100 may also include servers 106. Cloud servers, also known as virtual servers or virtual machines, are virtualized computing instances hosted in the cloud. They provide the processing power, memory, storage, and networking capabilities needed to run applications and services in a cloud environment. In some embodiments, cloud servers are created using virtualization technologies, such as hypervisors or containerization, which abstract the underlying physical hardware. Multiple virtual servers can run simultaneously on a single physical server, enabling efficient utilization of resources. In some embodiments, cloud servers can be provisioned and deployed rapidly on demand. Cloud providers may offer self-service portals or application programming interfaces (APIs) that allow users to request and configure virtual server instances based on their computing needs. The provisioning process typically involves selecting the desired computing processing unit (CPU), memory, storage, and networking resources.

Cloud resources 100 may also include software platform 108. In cloud computing, a software platform, also known as a platform as a service (PaaS), may refer to a cloud-based computing environment that provides a platform for developing, deploying, and managing software applications. Software platform 108 may offer a complete set of tools, frameworks, libraries, and services that facilitate the development and execution of applications without the need to manage the underlying infrastructure. For example, software platform 108 may provide a development environment where developers can create, test, and deploy applications. This environment typically includes integrated development tools (IDEs), software development kits (SDKs), and programming languages that simplify application development. Software platform 108 may offer mechanisms to deploy applications to the cloud infrastructure without the need for manual infrastructure setup. Software platform 108 may provide services for deploying, scaling, and managing applications, handling tasks such as load balancing, automatic scaling, and resource allocation. Software platform 108 may provide middleware components and pre-built services that developers can leverage in their applications. These services can include databases, messaging queues, caching, authentication, and more. By utilizing these pre-built services, developers can accelerate development and reduce the need to build and manage these components from scratch.

Cloud resources 100 may also include storage 110. Storage 110 may refer to a service provided by cloud computing providers that allows users to store, access, and manage data and files remotely over the Internet. Instead of storing data on local storage devices like hard drives or physical servers, storage 110 may enable users to save their files on remote servers maintained by a cloud storage provider. These files can then be accessed from anywhere with an Internet connection and compatible devices. Storage 110 may enable users to store their data on remote servers, which are typically hosted in data centers operated by the cloud storage provider. This allows users to access their files from any location and any device with an Internet connection.

Cloud resources 100 may also be connected via path 112, path 114, and/or other paths that are shown in FIG. 1 but not labeled for simplicity. Each path may represent a connection and/or dependency between different cloud resources. For example, in a cloud network, where resources and services are hosted in virtualized environments, the underlying infrastructure and management systems play a crucial role in determining what devices are connected to each other. To identify resources within cloud resources 100, the system may use a hypervisor or virtualization layer. In a cloud environment, virtualization technology is used to create and manage virtual machines or containers. The hypervisor or virtualization layer is responsible for managing resources and allocating those resources to these virtual instances. By interacting with the hypervisor, the system can obtain information about the virtual machines or containers running on the physical hosts.

Additionally or alternatively, to identify resources within cloud resources 100, the system may use Software-Defined Networking (SDN). SDN technology abstracts the network control plane from the underlying hardware and centralizes it in a software-based controller. The system can communicate with the SDN controller to gather information about the network topology, including virtual switches, routers, and network links. The SDN controller provides visibility into how devices are connected within the cloud network.

Additionally or alternatively, to identify resources within cloud resources 100, the system may use cloud management platforms that provide an interface for managing and orchestrating the cloud infrastructure. These platforms typically include features for network management, allowing administrators to view and control the connectivity between virtual instances. The system can leverage the management platform's APIs or command-line tools to retrieve information about the network topology and connected devices.

Additionally or alternatively, to identify resources within cloud resources 100, the system may use Virtual Private Cloud (VPC) configuration. For example, cloud providers may offer VPC services that allow users to create isolated network environments within the cloud infrastructure. Through VPC configuration, the system can determine the devices connected to specific VPCs, subnets, or security groups. This information is typically available through the cloud provider's management console or API.

The system may further monitor network traffic along path 112 and/or path 114. By monitoring network traffic within the cloud network, the system can analyze packet headers and flow data to identify devices communicating with each other. Network monitoring tools can capture and analyze traffic at various points, such as virtual switches, routers, or dedicated monitoring interfaces, to provide visibility into device connectivity and communication patterns. For example, the system may monitor network performance, traffic patterns, and resource utilization within the cloud environment. To do so, the system may use features like flow logs, packet capture, and real-time monitoring dashboards to help the system monitor and troubleshoot network issues.

In some embodiments, the system may determine the plurality of interconnections and/or interconnectivity between cloud resources. The system may do so by intercepting and storing packets traversing the network, allowing the system to inspect the captured data for analysis. Additionally or alternatively, the system may use virtual network taps. Virtual network taps or port mirroring features provided by virtualization platforms allow the system to mirror network traffic from one or more virtual machine interfaces to a designated monitoring interface. This enables the monitoring system to capture and analyze the traffic without disrupting the normal operation of the virtual machines.

Additionally or alternatively, the system may use flow monitoring. Flow monitoring is a technique that collects aggregated traffic statistics based on flow records generated by network devices, such as routers or switches. These protocols export flow records that contain information about source and destination IP addresses, port numbers, protocol, and other relevant traffic details. For example, when determining the plurality of interconnections between cloud resources, the system may determine a first virtual switch between a first cloud resource of a subset of cloud resources and a second cloud resource of a subset of cloud resources. The system may then manage network traffic through the first virtual switch.

For example, virtual switches may be used by the system to provide connectivity and efficient data transfer between the various cloud resources. Virtual switches may be employed within the hypervisor or virtualization layer to connect virtual machines or containers. Each host running virtual instances typically has its virtual switch. Virtual switches operate similarly to physical switches, providing connectivity at the virtual network level. In some embodiments, the system may use virtual local area networks (VLANs), which are used to logically segment the network within a cloud environment. VLANs allow the system to separate traffic and enforce security policies by creating isolated virtual networks. Virtual switches handle VLAN tagging and ensure that traffic is correctly routed within the designated VLANs.

In some embodiments, the system may use network switches that use various forwarding mechanisms, such as MAC address learning and forwarding tables, to determine how to forward incoming packets to the appropriate destination. Switches may learn the MAC addresses associated with each port by examining the source addresses of incoming packets. This information may then be used to efficiently forward subsequent packets to the correct destination ports.

In some embodiments, the system may use Quality of Service (QoS) features to prioritize network traffic based on predefined rules or policies. QoS can be used to allocate network resources and prioritize certain types of traffic, such as real-time communications or critical applications, over less time-sensitive traffic. QoS mechanisms in switches help ensure that important data flows are given the necessary network resources and bandwidth.

Additionally or alternatively, the system may use a Network Intrusion Detection/Prevention System (IDS/IPS). Intrusion detection and prevention systems are security appliances or software solutions that monitor network traffic for malicious activities. An IDS/IPS analyzes network packets in real time, looking for known patterns or anomalies that indicate potential security threats. These systems can be deployed within the cloud network to monitor and protect against unauthorized access or suspicious behavior.

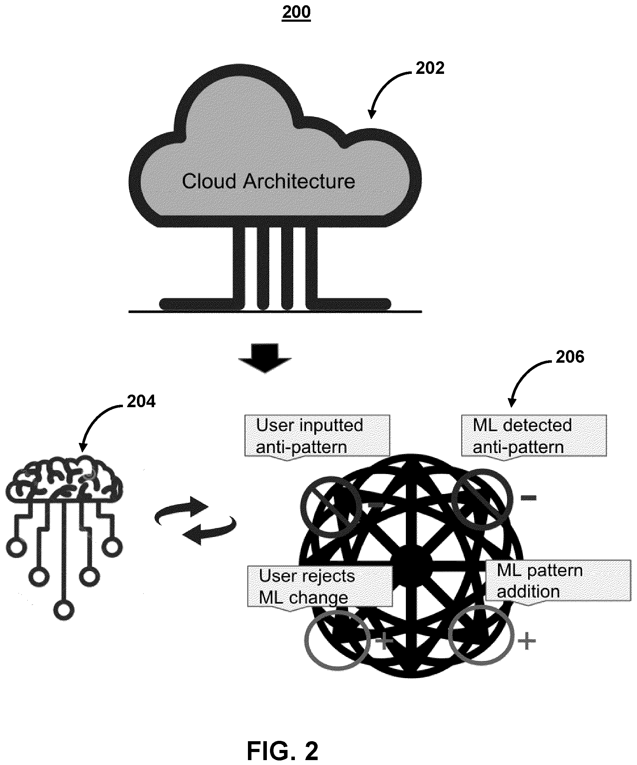

FIG. 2 shows an illustrative diagram for adjusting cloud architecture patterns, in accordance with one or more embodiments. For example, FIG. 2 may represent system 200, which may receive one or more cloud architecture patterns (e.g., cloud architecture pattern 202). In some embodiments, cloud architecture pattern 202 may be based on arrangements of used and unused cloud resources and their interconnectivity (e.g., as described in FIG. 1 above). In some embodiments, cloud architecture pattern 202 may be specific to an application, cloud architecture processing requirement, function, time period, and/or other scenario, and the system may archive cloud architecture pattern 202 with this information for training purposes.

For example, in some embodiments, the system may receive one or more processing requirements for a potential cloud architecture pattern. As described herein, a processing requirement may comprise computational capabilities and resources necessary to perform specific tasks or run software applications. In some embodiments, processing requirements may include availability, cost, security, incidents, and/or speed. For example, processing requirements may comprise a required CPU's clock speed (measured in gigahertz), software dependencies, storage requirements, etc.

The one or more cloud architecture patterns may then be used to train model 204 to generate potential cloud architecture patterns corresponding to inputted cloud architecture processing requirements. For example, model 204 (e.g., a machine learning model (ML)) may be trained on historical usage data for cloud resources in known cloud architecture patterns. The known cloud architecture patterns may comprise respective arrangements of used and unused cloud resources and their interconnectivity. Once trained, model 204 may generate outputs (e.g., pattern 206) that comprise recommendations for potential cloud architecture patterns corresponding to inputted cloud architecture processing requirements. For example, the system may provision cloud resources, such as virtual machines, storage volumes, databases, and networking components, on demand through self-service portals or APIs.

Cloud users or administrators can request and allocate resources based on their requirements, with the system dynamically assigning and allocating the necessary resources. For example, as shown in FIG. 2, the system may receive adjustments and changes to potential cloud architecture patterns corresponding to inputted cloud architecture processing requirements. The system may store the changes and/or adjustments as well as update the patterns and/or optimizations based on these changes. That is, the system may further refine the model based on changes and/or adjustments as well as update the patterns and/or optimizations based on these changes.

The system may generate outputs (e.g., pattern 206) that comprise recommendations for potential cloud architecture patterns corresponding to inputted cloud architecture processing requirements. The system may further transmit communications and/or otherwise cause one or more cloud resources to adopt a cloud architecture pattern. For example, the system may transmit instructions for resource provisioning. Based on the instruction, cloud resources, such as virtual machines, storage volumes, databases, and networking components, may be provisioned on demand. Additionally or alternatively, the system may use Infrastructure as Code (IaC) to define patterns and enact patterns. For example, the system may use IaC where cloud resources and their configurations are defined using machine-readable configuration files.

For example, based on the output, the system may select a subset of cloud resources from the first set of available cloud resources based on the first cloud architecture pattern and generate a resource schedule for use of the subset of cloud resources based on the first cloud architecture pattern. The system may then auto-scale the use of a first cloud resource of the subset of cloud resources based on the resource schedule. Auto-scaling is a feature that dynamically adjusts the number of resources based on workload demands. The system may provide auto-scaling capabilities that automatically add or remove instances or resources to match the pattern.

In some embodiments, the system may detect an anti-pattern for a specific processing requirement as opposed to an optimization. For example, an anti-pattern can lead to suboptimal results, increased complexity, poor performance, and/or difficulty in maintaining and scaling systems. The system may determine whether potential cloud architecture patterns corresponding to inputted cloud architecture processing requirements result in an anti-pattern for that cloud architecture processing requirement.

For example, the system may receive a cloud architecture processing requirement (e.g., representing a processing requirement that may need to be maximized (e.g., based on a cloud architecture pattern) or may need not to be minimized (e.g., based on a cloud architecture anti-pattern)). By doing so, the system may determine a cloud architecture pattern that is optimized for one or more processing requirements such as cost, speed, availability, scalability, reliability, etc. and/or optimized to prevent one or more processing requirements from being minimized.

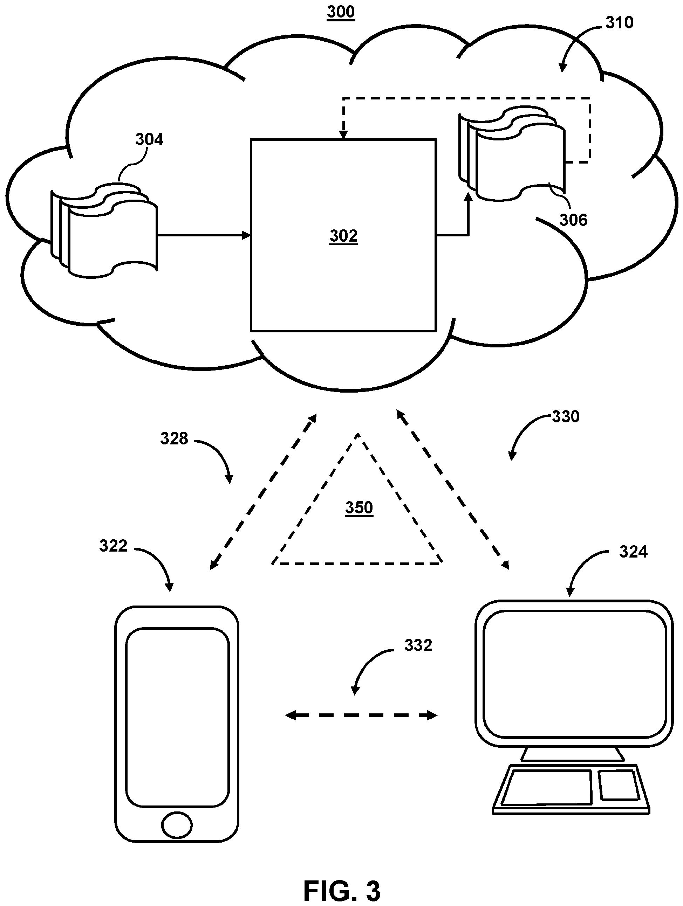

FIG. 3 shows illustrative components for a system used to train artificial intelligence models on standardized cloud architecture patterns corresponding to specific requirements, in accordance with one or more embodiments. For example, FIG. 3 may show illustrative components for models used to determine potential cloud architecture patterns corresponding to inputted cloud architecture processing requirements. As shown in FIG. 3, system 300 may include mobile device 322 and user terminal 324. While shown as a smartphone and a personal computer, respectively, in FIG. 3, it should be noted that mobile device 322 and user terminal 324 may be any computing device, including, but not limited to, a laptop computer, a tablet computer, a handheld computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system and may feature one or more component devices. It should also be noted that system 300 is not limited to three devices. Users may, for instance, utilize one or more devices to interact with one another, one or more servers, or other components of system 300. It should be noted that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (I/O) paths. Each of these devices may also include processors and/or control circuitry to send and receive commands, requests, and other suitable data using the I/O paths. The control circuitry may comprise any suitable processing, storage, and/or I/O circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational responses, queries, and/or notifications).

Additionally, as mobile device 322 and user terminal 324 are shown as a touchscreen smartphone and a personal computer, respectively, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communication paths, such as a satellite path, a fiber-optic path, a cable path, a path that supports Internet communications (e.g., IPTV), free-space connections (e.g., for broadcast or other wireless signals), or any other suitable wired or wireless communication path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include a plurality of cloud resources (e.g., cloud resources 100 (FIG. 1)). Cloud components 310 may include model 302, which may be a machine learning model, artificial intelligence model, etc. (which may be referred to collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. For example, model 302 may be trained on historical usage data for cloud resources in known cloud architecture patterns. The known cloud architecture patterns may comprise respective arrangements of used and unused cloud resources and their interconnectivity. The outputs of model 302 may comprise recommendations for potential cloud architecture patterns corresponding to inputted cloud architecture processing requirements.

In some embodiments, outputs 306 may be fed back to model 302 as input to train model 302 (e.g., alone or in conjunction with user indications of the accuracy of outputs 306, labels associated with the inputs, or other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., potential cloud architecture patterns corresponding to inputted cloud architecture processing requirements).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors be sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, backpropagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether a given input corresponds to a classification of model 302 (e.g., potential cloud architecture patterns corresponding to inputted cloud architecture processing requirements).

In some embodiments, the model (e.g., model 302) may automatically perform actions based on outputs 306. In some embodiments, the model (e.g., model 302) may not perform any actions. The output of the model (e.g., model 302) may be used to cause a set of available cloud resources to adopt a given cloud architecture pattern.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be a REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: front-end layer and back-end layer, where microservices reside. In this kind of architecture, the role of the API layer 350 may provide integration between front-end and back-end layers. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open-source API platforms and their modules. API layer 350 may use a developer portal. API layer 350 may use strong security constraints applying WAF and DDoS protection, and API layer 350 may use RESTful APIs as standard for external integration.

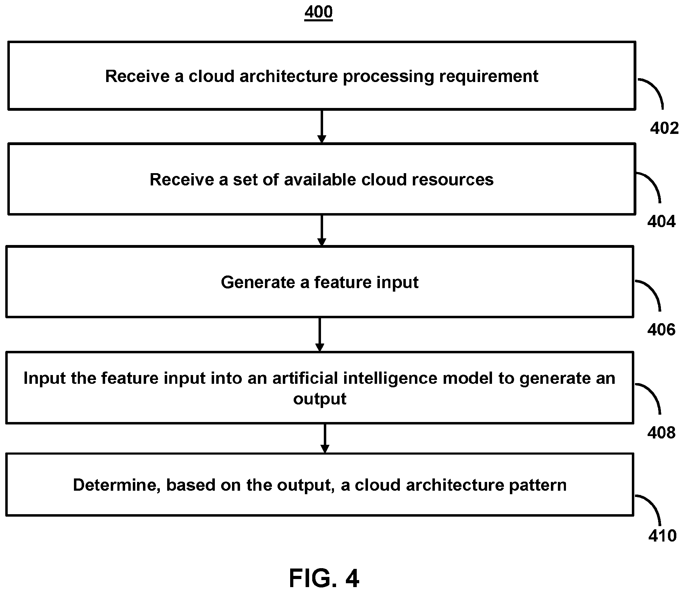

FIG. 4 shows a flowchart of the steps involved in optimizing cloud architectures using artificial intelligence models, in accordance with one or more embodiments. For example, the system may use process 400 (e.g., as implemented on one or more system components described above) in order to optimize cloud architectures using artificial intelligence models trained on a standardized cloud architecture pattern corresponding to specific requirements.

At step 402, process 400 (e.g., using one or more components described above) receives a cloud architecture processing requirement. For example, the system may receive a first cloud architecture processing requirement (e.g., representing a processing requirement that may need to be maximized (e.g., based on a cloud architecture pattern) or may need not to be minimized (e.g., based on a cloud architecture anti-pattern)). By doing so, the system may determine a cloud architecture pattern that is optimized for one or more processing requirements such as cost, speed, availability, scalability, reliability, etc. and/or optimized to prevent one or more processing requirements from being minimized.

For example, the system may determine the first cloud architecture pattern for the first set of available cloud resources by selecting a subset of cloud resources from the first set of available cloud resources and determining a plurality of interconnections between cloud resources of the subset of cloud resources. The system may do so by intercepting and storing packets traversing the network, allowing the system to inspect the captured data for analysis. Additionally or alternatively, the system may use virtual network taps. Virtual network taps or port mirroring features provided by virtualization platforms allow the system to mirror network traffic from one or more virtual machine interfaces to a designated monitoring interface. This enables the monitoring system to capture and analyze the traffic without disrupting the normal operation of the virtual machines.

Additionally or alternatively, the system may use flow monitoring. Flow monitoring is a technique that collects aggregated traffic statistics based on flow records generated by network devices, such as routers or switches. These protocols export flow records that contain information about source and destination IP addresses, port numbers, protocol, and other relevant traffic details. For example, when determining the plurality of interconnections between cloud resources, the system may determine a first virtual switch between a first cloud resource of a subset of cloud resources and a second cloud resource of a subset of cloud resources. The system may then manage network traffic through the first virtual switch.

In some embodiments, determining the plurality of interconnections between the cloud resources of the subset of cloud resources may comprise determining a first virtual switch between a first cloud resource of the subset of cloud resources and a second cloud resource of the subset of cloud resources and managing network traffic through the first virtual switch. For example, virtual switches may be used by the system to provide connectivity and efficient data transfer between the various cloud resources.

At step 404, process 400 (e.g., using one or more components described above) receives a set of available cloud resources. For example, the system may receive a first set of available cloud resources. For example, cloud architectures can be highly complex, involving numerous components and services such as virtual machines, storage, networking, load balancers, databases, and more. Optimizing such architectures requires understanding the intricate relationships and dependencies between these components, which can be difficult to capture accurately. The system may determine these relationships and dependencies for the set of available cloud resources.

At step 406, process 400 (e.g., using one or more components described above) generates a feature input. For example, the system may generate a first feature input based on the first cloud architecture processing requirement and the first set of available cloud resources. A feature input may refer to the individual variables or attributes that are provided as input to a model to make predictions or perform a task. Features represent the measurable characteristics or properties of the data being analyzed, and they serve as the basis for learning patterns and relationships within the data. Features can be numeric, categorical, or even derived from other features through feature engineering.

In some embodiments, features are used to represent the data in a structured format that the learning algorithm can understand. Each feature corresponds to a specific aspect or attribute of the data that is relevant to the problem at hand. For example, in a spam-detection problem, features could include the length of the email, the presence of certain keywords, or the sender's address. In some embodiments, importance or relevance of features varies depending on the problem and the chosen learning algorithm. The system may use feature selection or feature importance analysis techniques to identify the most informative features that contribute significantly to the predictive power of the model. In some embodiments, the system may use feature engineering to create or transform features to improve the model's performance. This can include combining existing features, creating interaction terms, scaling features, and/or generating new features based on domain knowledge.

In some embodiments, generating a feature input may be difficult as cloud architectures can be highly complex, involving numerous components and services such as virtual machines, storage, networking, load balancers, databases, and more. Optimizing such architectures requires understanding the intricate relationships and dependencies between these components, which can be difficult to capture accurately. To further complicate this issue, cloud providers often offer a wide range of services and configurations, each with its own set of options and parameters. This lack of standardization makes it challenging to develop artificial intelligence models that can effectively optimize across multiple cloud platforms and configurations. Accordingly, when generating the cloud architecture pattern, the systems and methods may generate a standardized taxonomy of the used and unused cloud resources and their interconnectivity.

In some embodiments, the system may determine and/or reformat a taxonomy of the set of available cloud resources. For example, the system may determine a first taxonomy for the first set of available cloud resources. The system may determine a standardized taxonomy of the known cloud architecture patterns. The system may then reformat the first taxonomy based on the standardized taxonomy to generate a second taxonomy. For example, the first taxonomy may describe the arrangements of used and unused cloud resources and their interconnectivity of the first set of available cloud resources using a first classification.

As referred to herein, a taxonomy may refer to the categorization or classification of computer networks based on various criteria or characteristics. It provides a framework for organizing and understanding the different types of computer networks, components, connections, etc. based on their purpose, scale, architecture, topology, and/or other relevant factors. The system may then select a standardized taxonomy that is not specific to a particular set of available cloud resources and/or a specific cloud provider. For example, standardization ensures compatibility and interoperability between different systems, devices, or components. By adhering to common standards, products and technologies from different manufacturers can work together seamlessly, enabling easy integration, communication, and collaboration.

At step 408, process 400 (e.g., using one or more components described above) inputs the feature input into an artificial intelligence model to generate an output. For example, the system may input the first feature input into a first artificial intelligence model to generate a first output. For example, the first artificial intelligence model may be trained on historical usage data for cloud resources in known cloud architecture patterns. The known cloud architecture patterns may comprise respective arrangements of used and unused cloud resources and their interconnectivity. The outputs of the first artificial intelligence model comprise recommendations for potential cloud architecture patterns corresponding to inputted cloud architecture processing requirements.

In some embodiments, training the first artificial intelligence model on the historical usage data for the cloud resources in the known cloud architecture patterns may comprise training (or retraining) the model at a given frequency. For example, the system may determine when to update a model based on feedback and/or outputs. For example, the system may determine a first training frequency. The system may then determine to collect additional historical usage data based on the first training frequency. The system may then retrain the first artificial intelligence model based on the additional historical usage data.

In some embodiments, the system may select a particular model based on a processing requirement. For example, the system may train a different model to detect potential cloud architecture patterns (or anti-patterns). Furthermore, in some embodiments, the system may retrieve a plurality of artificial intelligence models. The system may determine respective weights of the first cloud architecture processing requirement in training each of the plurality of artificial intelligence models. The system may select the first artificial intelligence model from the plurality of artificial intelligence models based on a respective weight of the first cloud architecture processing requirement in training the first artificial intelligence model.

Artificial intelligence models need to continuously adapt and learn from these changes to provide effective optimization. Nonetheless, real-time monitoring and analysis of cloud infrastructure can be computationally intensive and require constant updates to the artificial intelligence models. Accordingly, when generating the standardized cloud architecture pattern, the systems and methods may generate the standardized cloud architecture pattern at a frequency based on characteristics (e.g., a number of resources in the cloud architecture, the processing power of the cloud architecture, the reliability of the cloud architecture, etc.). The system may determine the frequency based on one or more characteristics. For example, the system may determine a first training frequency. The system may determine to collect additional historical usage data based on the first training frequency. The system may then retrain the first artificial intelligence model based on the additional historical usage data. Alternatively or additionally, the system may determine a number of devices in the first set of available cloud resources. The system may then determine a required training frequency based on the number of devices. The system may then determine whether the required training frequency corresponds to the first training frequency. For example, larger device networks may require more frequent retraining.

Alternatively or additionally, the system may determine a first application for the first set of available cloud resources. The system may determine a required training frequency based on the first application. The system may then determine whether the required training frequency corresponds to the first training frequency. For example, particular applications may require more frequent retraining.

Alternatively or additionally, the system may determine a first reliability requirement for the first set of available cloud resources. The system may determine a required training frequency based on the first reliability requirement. The system may determine whether the required training frequency corresponds to the first training frequency. For example, the system may retrain more frequently if a particular reliability is required.

Alternatively or additionally, the system may determine an average processing load for the first set of available cloud resources. The system may determine a required training frequency based on the average processing load. The system may determine whether the required training frequency corresponds to the first training frequency. For example, the system may retrain more frequently for larger processing loads.

Artificial intelligence models rely on large amounts of data to learn and make accurate predictions. In the case of optimizing cloud architectures, obtaining relevant and high-quality data can be challenging. Access to real-time, fine-grained data about resource utilization, performance metrics, and user behavior is crucial for effective optimization. Accordingly, when generating the standardized cloud architecture pattern, the systems and methods may first validate any incoming usage data for the used and unused cloud resources and their interconnectivity. For example, training the first artificial intelligence model on the historical usage data for the cloud resources in the known cloud architecture patterns may comprise determining a first validation requirement for the historical usage data and validating the historical usage data based on the first validation requirement. In some embodiments, the system may determine the first validation requirement based on one or more criteria. For example, the system may determine a number of devices in the first set of available cloud resources. The system may determine the first validation requirement based on the number of devices.

At step 410, process 400 (e.g., using one or more components described above) determines, based on the output, a cloud architecture pattern. For example, the system may determine, based on the first output, a first cloud architecture pattern for the first set of available cloud resources. In some embodiments, the system may then transmit a first communication, wherein the first communication causes the first set of available cloud resources to adopt the first cloud architecture pattern. The system may select a subset of cloud resources from the first set of available cloud resources. The system may generate a resource schedule for use of the subset of cloud resources based on the first cloud architecture pattern. The system may then auto-scale use of a first cloud resource of the subset of cloud resources based on the resource schedule.

In some embodiments, the system may receive additional information, manual adjustments, new processing requirements, etc. The system may then update the model and/or potential cloud architecture patterns. For example, the system may receive a second cloud architecture processing requirement. The system may generate a second feature input based on the second cloud architecture processing requirement and the first set of available cloud resources. The system may input the second feature input into the first artificial intelligence model to generate a second output. The system may determine, based on the second output, a second cloud architecture pattern for the first set of available cloud resources. The system may transmit a second communication, wherein the second communication causes the first set of available cloud resources to adopt the second cloud architecture pattern.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for optimizing cloud architectures using artificial intelligence models trained on a standardized cloud architecture pattern corresponding to specific requirements.
2. The method of the preceding embodiment, further comprising: receiving a first cloud architecture processing requirement; receiving a first set of available cloud resources; generating a first feature input based on the first cloud architecture processing requirement and the first set of available cloud resources; inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements; determining, based on the first output, a first cloud architecture pattern for the first set of available cloud resources; and transmitting a first communication, wherein the first communication causes the first set of available cloud resources to adopt the first cloud architecture pattern.
3. The method of any one of the preceding embodiments, further comprising: receiving a second cloud architecture processing requirement; generating a second feature input based on the second cloud architecture processing requirement and the first set of available cloud resources; inputting the second feature input into the first artificial intelligence model to generate a second output; determining, based on the second output, a second cloud architecture pattern for the first set of available cloud resources; and transmitting a second communication, wherein the second communication causes the first set of available cloud resources to adopt the second cloud architecture pattern.
4. The method of any one of the preceding embodiments, wherein the first feature input is further based on a second taxonomy, wherein the second taxonomy is generated by: determining a first taxonomy for the first set of available cloud resources; determining a standardized taxonomy of the known cloud architecture patterns; and reformatting the first taxonomy based on the standardized taxonomy to generate the second taxonomy.
5. The method of any one of the preceding embodiments, wherein determining the first cloud architecture pattern for the first set of available cloud resources further comprises: selecting a subset of cloud resources from the first set of available cloud resources; and determining a plurality of interconnections between the subset of cloud resources.
6. The method of any one of the preceding embodiments, wherein determining the plurality of interconnections between the subset of cloud resources further comprises: determining a first virtual switch between a first cloud resource of the subset of cloud resources and a second cloud resource of the subset of cloud resources; and managing network traffic through the first virtual switch.
7. The method of any one of the preceding embodiments, wherein training the first artificial intelligence model on the historical usage data for the cloud resources in the known cloud architecture patterns further comprises: determining a first training frequency; determining to collect additional historical usage data based on the first training frequency; and retraining the first artificial intelligence model based on the additional historical usage data.
8. The method of any one of the preceding embodiments, wherein determining the first training frequency further comprises: determining a number of devices in the first set of available cloud resources; determining a required training frequency based on the number of devices; and determining whether the required training frequency corresponds to the first training frequency.
9. The method of any one of the preceding embodiments, wherein determining the first training frequency further comprises: determining a first application for the first set of available cloud resources; determining a required training frequency based on the first application; and determining whether the required training frequency corresponds to the first training frequency.
10. The method of any one of the preceding embodiments, wherein determining the first training frequency further comprises: determining a first reliability requirement for the first set of available cloud resources; determining a required training frequency based on the first reliability requirement; and determining whether the required training frequency corresponds to the first training frequency.
11. The method of any one of the preceding embodiments, wherein determining the first training frequency further comprises: determining an average processing load for the first set of available cloud resources; determining a required training frequency based on the average processing load; and determining whether the required training frequency corresponds to the first training frequency.
12. The method of any one of the preceding embodiments, further comprising: retrieving a plurality of artificial intelligence models; determining respective weights of the first cloud architecture processing requirement in training each of the plurality of artificial intelligence models; and selecting the first artificial intelligence model from the plurality of artificial intelligence models based on a respective weight of the first cloud architecture processing requirement in training the first artificial intelligence model.
13. The method of any one of the preceding embodiments, wherein training the first artificial intelligence model on the historical usage data for the cloud resources in the known cloud architecture patterns further comprises: determining a first validation requirement for the historical usage data; and validating the historical usage data based on the first validation requirement.
14. The method of any one of the preceding embodiments, wherein determining the first validation requirement further comprises: determining a number of devices in the first set of available cloud resources; and determining the first validation requirement based on the number of devices.
15. The method of any one of the preceding embodiments, wherein transmitting the first communication further comprises: selecting a subset of cloud resources from the first set of available cloud resources; generating a resource schedule for use of the subset of cloud resources based on the first cloud architecture pattern; and auto-scaling use of a first cloud resource of the subset of cloud resources based on the resource schedule.
16. A tangible, non-transitory, machine-readable medium storing instructions that, when executed by a data processing apparatus, cause the data processing apparatus to perform operations comprising those of any of embodiments 1-15.
17. A system comprising one or more processors; and memory storing instructions that, when executed by the processors, cause the processors to effectuate operations comprising those of any of embodiments 1-15.
18. A system comprising means for performing any of embodiments 1-15.

Various examples are set out in the following numbered paragraphs (NPs).
NP 1. A system for optimizing cloud architectures using artificial intelligence models trained on standardized cloud architecture patterns corresponding to specific requirements, the system comprising:
   one or more processors; and
   one or more non-transitory, computer-readable media having instructions recorded thereon that, when executed by the one or more processors, cause operations comprising:
      receiving a first cloud architecture processing requirement;
      receiving a first set of available cloud resources, wherein the first set of available cloud resources comprises virtual machines corresponding to storage volumes, databases, and networking components;
      generating a first feature input based on the first cloud architecture processing requirement and the first set of available cloud resources;
      inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements;
      determining, based on the first output, a first cloud architecture pattern for the first set of available cloud resources;
      selecting a subset of cloud resources from the first set of available cloud resources based on the first cloud architecture pattern;
      generating a resource schedule for use of the subset of cloud resources based on the first cloud architecture pattern; and
      auto-scaling use of a first cloud resource of the subset of cloud resources based on the resource schedule.
NP 2. A method for optimizing cloud architectures, the method comprising:
   receiving a first cloud architecture processing requirement;
   receiving a first set of available cloud resources;
   generating a first feature input based on the first cloud architecture processing requirement and the first set of available cloud resources;
   inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements;
   determining, based on the first output, a first cloud architecture pattern for the first set of available cloud resources; and
   transmitting a first communication, wherein the first communication causes the first set of available cloud resources to adopt the first cloud architecture pattern.
NP 3. The method of NP 2, further comprising:
   receiving a second cloud architecture processing requirement;
   generating a second feature input based on the second cloud architecture processing requirement and the first set of available cloud resources;
   inputting the second feature input into the first artificial intelligence model to generate a second output;
   determining, based on the second output, a second cloud architecture pattern for the first set of available cloud resources; and
   transmitting a second communication, wherein the second communication causes the first set of available cloud resources to adopt the second cloud architecture pattern.
NP 4. The method of NP 2, wherein the first feature input is further based on a second taxonomy, wherein the second taxonomy is generated by:
   determining a first taxonomy for the first set of available cloud resources;
   determining a standardized taxonomy of the known cloud architecture patterns; and
   reformatting the first taxonomy based on the standardized taxonomy to generate the second taxonomy.
NP 5. The method of NP 2, wherein determining the first cloud architecture pattern for the first set of available cloud resources further comprises:
   selecting a subset of cloud resources from the first set of available cloud resources; and
   determining a plurality of interconnections between the subset of cloud resources.
NP 6. The method of NP 5, wherein determining the plurality of interconnections between the subset of cloud resources further comprises:
   determining a first virtual switch between a first cloud resource of the subset of cloud resources and a second cloud resource of the subset of cloud resources; and
   managing network traffic through the first virtual switch.
NP 7. The method of NP 2, wherein training the first artificial intelligence model on the historical usage data for the cloud resources in the known cloud architecture patterns further comprises:
   determining a first training frequency;
   determining to collect additional historical usage data based on the first training frequency; and
   retraining the first artificial intelligence model based on the additional historical usage data.
NP 8. The method of NP 7, wherein determining the first training frequency further comprises:
   determining a number of devices in the first set of available cloud resources;
   determining a required training frequency based on the number of devices; and
   determining whether the required training frequency corresponds to the first training frequency.
NP 9. The method of NP 7, wherein determining the first training frequency further comprises:
   determining a first application for the first set of available cloud resources;
   determining a required training frequency based on the first application; and
   determining whether the required training frequency corresponds to the first training frequency.
NP 10. The method of NP 7, wherein determining the first training frequency further comprises:
   determining a first reliability requirement for the first set of available cloud resources;
   determining a required training frequency based on the first reliability requirement; and
   determining whether the required training frequency corresponds to the first training frequency.
NP 11. The method of NP 7, wherein determining the first training frequency further comprises:
   determining an average processing load for the first set of available cloud resources;
   determining a required training frequency based on the average processing load; and
   determining whether the required training frequency corresponds to the first training frequency.
NP 12. The method of NP 2, further comprising:
   retrieving a plurality of artificial intelligence models;
   determining respective weights of the first cloud architecture processing requirement in training each of the plurality of artificial intelligence models; and
   selecting the first artificial intelligence model from the plurality of artificial intelligence models based on a respective weight of the first cloud architecture processing requirement in training the first artificial intelligence model.
NP 13. The method of NP 2, wherein training the first artificial intelligence model on the historical usage data for the cloud resources in the known cloud architecture patterns further comprises:
   determining a first validation requirement for the historical usage data; and
   validating the historical usage data based on the first validation requirement.
NP 14. The method of NP 13, wherein determining the first validation requirement further comprises:
   determining a number of devices in the first set of available cloud resources; and
   determining the first validation requirement based on the number of devices.
NP 15. The method of NP 2, wherein transmitting the first communication further comprises:
   selecting a subset of cloud resources from the first set of available cloud resources;
   generating a resource schedule for use of the subset of cloud resources based on the first cloud architecture pattern; and
   auto-scaling use of a first cloud resource of the subset of cloud resources based on the resource schedule.
NP 16. One or more non-transitory, computer-readable media, comprising instructions that, when executed by one or more processors, cause operations comprising:
   receiving a first cloud architecture processing requirement;
   receiving a first set of available cloud resources;
   generating a first feature input based on the first cloud architecture processing requirement and the first set of available cloud resources;
   inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements; and
   determining, based on the first output, a first cloud architecture pattern for the first set of available cloud resources.
NP 17. The one or more non-transitory, computer-readable media of NP 16, wherein the instructions further cause operations comprising:
   receiving a second cloud architecture processing requirement;
   generating a second feature input based on the second cloud architecture processing requirement and the first set of available cloud resources;
   inputting the second feature input into the first artificial intelligence model to generate a second output; and
   determining, based on the second output, a second cloud architecture pattern for the first set of available cloud resources.
NP 18. The one or more non-transitory, computer-readable media of NP 16, wherein the first feature input is further based on a second taxonomy, wherein the second taxonomy is generated by:
   determining a first taxonomy for the first set of available cloud resources;
   determining a standardized taxonomy of the known cloud architecture patterns; and
   reformatting the first taxonomy based on the standardized taxonomy to generate the second taxonomy.
NP 19. The one or more non-transitory, computer-readable media of NP 16, wherein determining the first cloud architecture pattern for the first set of available cloud resources further comprises:
   selecting a subset of cloud resources from the first set of available cloud resources; and
   determining a plurality of interconnections between the subset of cloud resources.
NP 20. The one or more non-transitory, computer-readable media of NP 16, wherein determining the plurality of interconnections between the subset of cloud resources further comprises:
   determining a first virtual switch between a first cloud resource of the subset of cloud resources and a second cloud resource of the subset of cloud resources; and
   managing network traffic through the first virtual switch.

## Claims

1. A system for optimizing cloud architectures using artificial intelligence models trained on standardized cloud architecture patterns corresponding to specific requirements, the system comprising:
one or more processors; and
one or more non-transitory, computer-readable media having instructions recorded thereon that, when executed by the one or more processors, cause operations comprising:
receiving a first cloud architecture processing requirement;
receiving a first set of available cloud resources, wherein the first set of available cloud resources comprises virtual machines corresponding to storage volumes, databases, and networking components;
generating a first feature input based on the first cloud architecture processing requirement and the first set of available cloud resources;
inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements;
determining, based on the first output, a first cloud architecture pattern for the first set of available cloud resources;
selecting a subset of cloud resources from the first set of available cloud resources based on the first cloud architecture pattern;
generating a resource schedule for use of the subset of cloud resources based on the first cloud architecture pattern; and
auto-scaling use of a first cloud resource of the subset of cloud resources based on the resource schedule.

2. A method for optimizing cloud architectures, the method comprising:
receiving a first cloud architecture processing requirement;
receiving a first set of available cloud resources;
generating a first feature input based on the first cloud architecture processing requirement and the first set of available cloud resources;
inputting the first feature input into a first artificial intelligence model to generate a first output, wherein the first artificial intelligence model is trained on historical usage data for cloud resources in known cloud architecture patterns, wherein the known cloud architecture patterns comprise respective arrangements of used and unused cloud resources and their interconnectivity, and wherein outputs of the first artificial intelligence model comprise recommendations for potential cloud architecture patterns corresponding to inputted cloud architecture processing requirements; and
determining, based on the first output, a first cloud architecture pattern for the first set of available cloud resources.

3. The method of claim 2 further comprising transmitting a first communication, wherein the first communication causes the first set of available cloud resources to adopt the first cloud architecture pattern.

4. The method of claim 2 or 3, further comprising:
receiving a second cloud architecture processing requirement;
generating a second feature input based on the second cloud architecture processing requirement and the first set of available cloud resources;
inputting the second feature input into the first artificial intelligence model to generate a second output;
determining, based on the second output, a second cloud architecture pattern for the first set of available cloud resources; and
optionally, transmitting a second communication, wherein the second communication causes the first set of available cloud resources to adopt the second cloud architecture pattern.

5. The method of any one of claims 2-4, wherein the first feature input is further based on a second taxonomy, wherein the second taxonomy is generated by:
determining a first taxonomy for the first set of available cloud resources;
determining a standardized taxonomy of the known cloud architecture patterns; and
reformatting the first taxonomy based on the standardized taxonomy to generate the second taxonomy.

6. The method of any one of claims 2-5, wherein determining the first cloud architecture pattern for the first set of available cloud resources further comprises:
selecting a subset of cloud resources from the first set of available cloud resources; and
determining a plurality of interconnections between the subset of cloud resources, optionally, wherein determining the plurality of interconnections between the subset of cloud resources further comprises:
determining a first virtual switch between a first cloud resource of the subset of cloud resources and a second cloud resource of the subset of cloud resources; and
managing network traffic through the first virtual switch.

7. The method of claim 2, wherein training the first artificial intelligence model on the historical usage data for the cloud resources in the known cloud architecture patterns further comprises:
determining a first training frequency;
determining to collect additional historical usage data based on the first training frequency; and
retraining the first artificial intelligence model based on the additional historical usage data.

8. The method of claim 7, wherein determining the first training frequency further comprises:
determining a number of devices in the first set of available cloud resources;
determining a required training frequency based on the number of devices or based on the first application; and
determining whether the required training frequency corresponds to the first training frequency.

9. The method of claim 7, wherein determining the first training frequency further comprises:
determining a first reliability requirement for the first set of available cloud resources;
determining a required training frequency based on the first reliability requirement; and
determining whether the required training frequency corresponds to the first training frequency.

10. The method of claim 7, wherein determining the first training frequency further comprises:
determining an average processing load for the first set of available cloud resources;
determining a required training frequency based on the average processing load; and
determining whether the required training frequency corresponds to the first training frequency.

11. The method of any one of claims 2-10, further comprising:
retrieving a plurality of artificial intelligence models;
determining respective weights of the first cloud architecture processing requirement in training each of the plurality of artificial intelligence models; and
selecting the first artificial intelligence model from the plurality of artificial intelligence models based on a respective weight of the first cloud architecture processing requirement in training the first artificial intelligence model.

12. The method of any one of claims 2-11, wherein training the first artificial intelligence model on the historical usage data for the cloud resources in the known cloud architecture patterns further comprises:
determining a first validation requirement for the historical usage data; and
validating the historical usage data based on the first validation requirement.

13. The method of claim 12, wherein determining the first validation requirement further comprises:
determining a number of devices in the first set of available cloud resources; and
determining the first validation requirement based on the number of devices.

14. The method of any one of claims 2-13, wherein transmitting the first communication further comprises:
selecting a subset of cloud resources from the first set of available cloud resources;
generating a resource schedule for use of the subset of cloud resources based on the first cloud architecture pattern; and
auto-scaling use of a first cloud resource of the subset of cloud resources based on the resource schedule.

15. One or more non-transitory, computer-readable media, comprising instructions that, when executed by one or more processors, cause the one or more processors to carry out a method according to any one of claims 2-14.
